# EUROPÄISCHE PATENTANMELDUNG

(11) **EP 1 223 787 A2**
(43) Veröffentlichungstag der Anmeldung: **17.07.2002**
(21) Anmeldenummer: 01440421.4
(22) Anmeldetag: 18.12.2001
(51) Int. Cl.: H04Q 11/00

(54) **Kommunikationssystem zur Übertragung optischer Signale**

(30) Priorität: 16.01.2001 DE 10101665
(71) Anmelder: ALCATEL, 75008 Paris (FR)
(72) Erfinder: Weis, Bernd X., 70825 Korntal-Münchingen (DE)
(74) Vertreter: Urlichs, Stefan, Dipl.-Phys.

(57) **Zusammenfassung**

Es wird ein Kommunikationssystem zur Übertragung optischer Signale angegeben, die im Wellenlängen-Multiplex mit unterschiedlichen Wellenlängen über optische Fasern übertragen werden. In mindestens einem Knotenpunkt des Kommunikationssystems sind mindestens eine Anschlußeinheit (2), an welche die optischen Fasern (1) angeschlossen sind, und ein Crossconnector (6) vorhanden. Der Crossconnector (6) ist mit der Anschlußeinheit (2) über optische Schnittstellen verbunden und die Signale gleicher Wellenlänge werden von der Anschlußeinheit (2) jeweils zu zwei Eingängen des Crossconnectors (6) geführt bzw. von zwei Ausgängen desselben zur Anschlußeinheit (2) geliefert. Es wird jeweils nur einer der entsprechenden Übertragungswege genutzt. Zur Verminderung der Anzahl von farbigen Lasern (4) in der Anschlußeinheit (2) werden von derselben die Signale jeder Wellenlänge bis zu einem passiven Splitter (7) nur auf einem Wege geliefert, welcher das jeweilige Signal verdoppelt und den beiden Eingängen des Crossconnectors (6) auf getrennten Wegen zuführt. Es werden in der Gegenrichtung je zwei Ausgänge des Crossconnectors (6) auf getrennten Wegen bis zu einem Koppler (8) geführt, durch welchen die beiden Wege zu einem Übertragungsweg vereinigt werden und der mit einem Eingang der Anschlußeinheit (2) verbunden ist, an welchen ein der jeweiligen Wellenlänge der optischen Signale entsprechender farbiger Laser (4) angeschlossen ist.

## Beschreibung

Die Erfindung bezieht sich auf ein Kommunikationssystem zur Übertragung optischer Signale, die im Wellenlängen-Multiplex mit unterschiedlichen Wellenlängen über optische Fasern übertragen werden, bei welchem in mindestens einem Knotenpunkt des Kommunikationssystems mindestens eine Anschlußeinheit, an welche die optischen Fasern angeschlossen sind, und ein Crossconnector vorhanden sind, bei welchem der Crossconnector mit der Anschlußeinheit über optische Schnittstellen verbunden ist und bei welchem die Signale gleicher Wellenlänge von der Anschlußeinheit jeweils zu zwei Eingängen des Crossconnectors geführt bzw. von zwei Ausgängen desselben zur Anschlußeinheit geliefert werden, wobei jeweils nur einer der entsprechenden Übertragungswege genutzt wird.

Zur schnellen Datenübertragung werden in modernen Netzen optische Fasern als Übertragungsmedium eingesetzt. Daten bzw. Signale werden als digitale Signale mit unterschiedlichen Wellenlängen im Wellenlängen-Multiplex über nur eine optische Faser übertragen. Jede Wellenlänge ist dabei Träger eines Informationssignals. Ein bekanntes System ist das "Wavelength Division Multiplex"-System. Wegen der immer höheren Datendichte wird dieses System auch als "Dense Wavelength Division Multiplex"-System bezeichnet. Auf dieses - im folgenden kurz "DWDM-System" genannte System - beziehen sich - stellvertretend für alle möglichen Wellenlängen-Multiplex-Systeme - die weiteren Ausführungen.

Die optischen Fasern eines solchen Kommunikationssystem sind in Knotenpunkten desselben an Anschlußeinheiten angeschlossen, die mit einem Multiplexer/Demultiplexer, mit farbigen Lasern unterschiedlicher Wellenlängen und Kontrolleinheiten ausgerüstet sind. In den Knotenpunkten sind außerdem beispielsweise in SDH-Technik (Synchrone Digitale Hirarchie) arbeitende Crossconnectoren (CC) angeordnet, durch welche die Signale nach Maßgabe eines zum System bzw. Netz gehörenden Managementsystems den "richtigen" Übertragungswegen aufgegeben werden, damit sie zum adressierten Empfänger gelangen, der über mindestens eine der optischen Fasern an das Kommunikationssystem angeschlossen ist.

Die Anschlußeinheit ist mit dem CC über digitale Schnittstellen, beispielsweise für den Synchronen Transfer Modus (STM), verbunden. Aus Gründen der Übertragungssicherheit werden von den Anschlußeinheiten nach Demultiplexierung die einzelnen, einer Wellenlänge zugeordneten Signale dem CC auf zwei getrennten Wegen zugeführt. Von den beiden Wegen wird nur einer ausgenutzt. Auf den anderen wird bei einem Fehler auf dem jeweils aktiven Weg umgeschaltet.

In Gegenrichtung werden die Signale einer Wellenlänge vom CC ebenfalls auf zwei Wegen zu der Anschlußeinheit übertragen, von denen jeweils wieder nur einer ausgenutzt wird. In der Anschlußeinheit ist für jeden der Übertragungswege, d.h. für jede Wellenlänge, ein farbiger Laser mit der entsprechenden Wellenlänge vorhanden. Die Signale der Laser werden in der Anschlußeinheit nach Maßgabe des Managementsystems gemultiplext und auf die angeschlossenen optischen Fasern des DWDM-Systems gegeben. Die hier eingesetzten farbigen Laser arbeiten als hochwertige Elemente sehr zuverlässig. Sie sind dementsprechend teuer. Da für jede Wellenlänge wegen der zwei Übertragungswege zwei farbige Laser in der Anschlußeinheit verwendet werden, sind die bisher im Einsatz befindlichen DWDM-Systeme sehr aufwendig.

Der Erfindung liegt die Aufgabe zugrunde, das eingangs geschilderte Kommunikationssystem so zu gestalten, daß der Aufwand in den Knotenpunkten vermindert werden kann.

Diese Aufgabe wird gemäß der Erfindung dadurch gelöst,
- daß von der Anschlußeinheit die Signale jeder Wellenlänge bis zu einem passiven Splitter nur auf einem Wege geliefert werden, welcher das jeweilige Signal verdoppelt und den beiden Eingängen des Crossconnectors auf getrennten Wegen zuführt, und
- daß je zwei Ausgänge des Crossconnectors auf getrennten Wegen bis zu einem Koppler geführt sind, durch welchen die beiden Wege zu einem Übertragungsweg vereinigt werden und der mit einem Eingang der Anschlußeinheit verbunden ist, an welchen ein der jeweiligen Wellenlänge der optischen Signale entsprechender farbiger Laser angeschlossen ist.

In den Knotenpunkten dieses Kommunikationssystems ist zwischen der Anschlußeinheit des DWDM-Systems und dem CC ein Element zwischengeschaltet, daß in einer Übertragungsrichtung als Splitter und in der anderen Übertragungsrichtung als Koppler arbeitet. Von der Anschlußeinheit des DWDM-Systems wird jedes Signal, das empfangsseitig mit einer Wellenlänge korrespondiert, nur noch einmal geliefert, und zwar zum jeweiligen Splitter, welcher dieselbe verdoppelt, so daß beim CC unverändert jeweils zwei gleiche Signale ankommen. Der CC liefert - ebenfalls unverändert - weiter jeweils zwei gleiche optische Signale auf bis zum Koppler reichenden getrennten Übertragungswegen, die vom Koppler zu einem Übertragungsweg zusammengefaßt und nur einem farbigen Laser mit der entsprechenden Wellenlänge zugeführt werden. In allen Fällen, und zwar auch bei Umschaltung des zu nutzenden Übertragungswegs im CC, sendet dann nur dieser eine farbige Laser, dessen Ausgangssignal nach Maßgabe des Managementsystems mit den Ausgangssignalen der anderen farbigen Laser mit anderen Wellenlängen gemultiplext und den angeschlossenen optischen Fasern des DWDM-Systems zugeführt wird. Damit können gegenüber den bekannten DWDM-Systemen 50 % der farbigen Laser eingespart werden. Die Sicherheit der Übertragung wird dadurch kaum vermindert, da - wie schon erwähnt - diese Laser sehr zuverlässig sind. Die sehr kurzen Übertragungswege zwischen den Schnittstellen der Anschlußeinheit des DWDM-Systems und den Splittern bzw. Kopplern, die für die Signale jeder Wellenlänge nur einmal vorhanden sind, beeinflussen die Übertragungssicherheit nicht. Der Aufbau der Anschlußeinheit des DWDM-Systems wird insgesamt wesentlich vereinfacht und sehr kostengünstig.

Ein Ausführungsbeispiel des Erfindungsgegenstandes ist in den Zeichnungen dargestellt,

Es zeigen:
Fig. 1 ein optisches Kommunikationssystem mit einem Knotenpunkt gemäß der Erfindung in schematischer Darstellung.
Fig. 2 eine Einzelheit des Knotenpunktes in vergrößerter Darstellung.

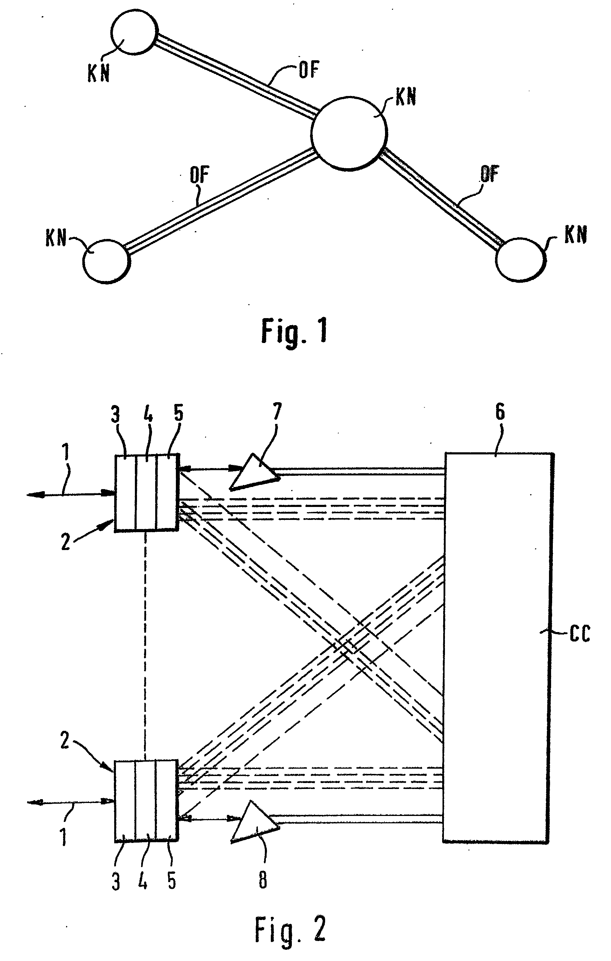

Ein optisches Kommunikationssystem kann gemäß der Darstellung in Fig. 1 beispielsweise vier Knotenpunkte KN aufweisen, die durch eine Vielzahl von optischen Fasern OF verbunden sind. Die Fasern OF sind in der Regel in optischen Kabeln zusammengefaßt. An die Knotenpunkte KN können beispielsweise Vermittlungsstellen oder Router angeschlossen sein. Dem Kommunikationssystem überlagert ist ein Managementsystem, nach dessen Befehlen die unterschiedlichen Übertragungswege in den Knotenpunkten KN durchgeschaltet werden.

Dazu ist in den Knotenpunkten KN für jede angeschlossene optische Faser 1 eine Anschlußeinheit 2 angeordnet. Zu jeder Anschlußeinheit 2 gehören ein Multiplexer/Demultiplexer 3, eine Anzahl farbiger Laser 4 und eine Kontrolleinheit 5. Jede Anschlußeinheit 2 ist über digitale optische Schnittstellen mit Eingängen eines Crossconnectors 6 verbunden. Von den Schnittstellen gehen mehrere Übertragungswege zur Übertragung der über die optischen Fasern 1 ankommenden Signale aus, von denen in Fig. 2 nur einer genauer dargestellt ist, während die anderen durch gestrichelte Linien angedeutet sind. Auf jedem Übertragungsweg werden nach Demultiplexierung nur Signale einer Wellenlänge übertragen, und zwar beispielsweise mit Schwarz-Weiß-Lasern. Jeder Übertragungsweg reicht ausgehend von der Anschlußeinheit 2 bis zu einem als Splitter oder Koppler arbeitenden Bauteil, das in Richtung des Crossconnectors 6 als passiver Splitter 7 wirkt. Durch den Splitter 7 wird der Übertragungsweg verdoppelt, so daß dem Crossconnector 6 zwei Signale mit der gleichen Wellenlänge auf zwei getrennten Wegen zugeführt werden. Von diesen Wegen wird nur einer genutzt. Der andere kann beispielsweise im stand-by Betrieb gehalten werden.

Die vom Crossconnector 6 empfangenen Signale werden nach Maßgabe des Managementsystems dem richtigen Empfänger zugeordnet und dazu über Ausgänge zurück zu einer der Anschlußeinheiten 2 übertragen. Der Crossconnector 6 hat dabei für jede Wellenlänge zwei Ausgänge, von denen nur einer genutzt wird. Von den Ausgängen des Crossconnectors 6 gehen für jede Wellenlänge zwei Übertragungswege aus. Auch hier sind nur für eine Wellenlänge die Übertragungswege genauer dargestellt, während die anderen wieder gestrichelt angedeutet sind. Die beiden Übertragungswege sind bis zu dem Bauteil geführt, das jetzt als Koppler 8 wirkt und die beiden Übertragungswege zu einem Übertragungsweg zusammenfaßt. Dieser ist über eine der digitalen Schnittstellen mit der Anschlußeinheit 2 verbunden und damit mit einem der in derselben vorhandenen farbigen Laser 4. In der Anschlußeinheit 2 ist für jede Schnittstelle ein farbiger Laser 4 angeordnet. Die Laser 4 haben alle unterschiedliche Wellenlängen. Das Ausgangssignal eines farbigen Lasers 4 wird mit den Ausgangssignalen der anderen farbigen Laser 4 gemultiplext und auf die an die Anschlußeinheit 2 angeschlossene optische Faser 1 gegeben.

Das Bauteil mit der Doppelfunktion Splitter 7/Koppler 8 kann in den Anschlußeinheiten 2 oder im Crossconnector 6 angeordnet werden.

## Patentansprüche

1. Kommunikationssystem zur Übertragung optischer Signale, die im Wellenlängen-Multiplex mit unterschiedlichen Wellenlängen über optische Fasern übertragen werden, bei welchem in mindestens einem Knotenpunkt des Kommunikationssystems mindestens eine Anschlußeinheit, an welche die optischen Fasern angeschlossen sind, und ein Crossconnector vorhanden sind, bei welchem der Crossconnector mit der Anschlußeinheit über optische Schnittstellen verbunden ist und bei welchem die Signale gleicher Wellenlänge von der Anschlußeinheit jeweils zu zwei Eingängen des Crossconnectors geführt bzw. von zwei Ausgängen desselben zur Anschlußeinheit geliefert werden, wobei jeweils nur einer der entsprechenden Übertragungswege genutzt wird, **dadurch gekennzeichnet,**
- **daß** von der Anschlußeinheit (2) die Signale jeder Wellenlänge bis zu einem passiven Splitter (7) nur auf einem Wege geliefert werden, welcher das jeweilige Signal verdoppelt und den beiden Eingängen des Crossconnectors (6) auf getrennten Wegen zuführt, und
- **daß** je zwei Ausgänge des Crossconnectors (6) auf getrennten Wegen bis zu einem Koppler (8) geführt werden, durch welchen die beiden Wege zu einem Übertragungsweg vereinigt werden und der mit einem Eingang der Anschlußeinheit (2) verbunden ist, an welchen ein der jeweiligen Wellenlänge der optischen Signale entsprechender farbiger Laser (4) angeschlossen ist.
